# EUROPÄISCHE PATENTSCHRIFT

(11) **EP 2 612 789 B1**
(45) Veröffentlichungstag und Bekanntmachung des Hinweises auf die Patenterteilung: **22.02.2017**
(21) Anmeldenummer: 12008445.4
(22) Anmeldetag: 19.12.2012
(51) Int. Cl.: B60M 1/24, B60M 1/30

(54) **Verfahren zur Verbindung von Stromschienen**
Method for connecting busbars
Procédé de liaison de rails conducteurs

(30) Priorität: 05.01.2012 DE 102012000118
(43) Veröffentlichungstag der Anmeldung: 10.07.2013
(73) Patentinhaber: Rail Power Systems GmbH, 81373 München (DE)
(72) Erfinder: Ruiz Garcia, José Francisco, 80997 München (DE)
(74) Vertreter: Oppermann, Frank

(56) Entgegenhaltungen:
- EP-A1- 1 436 163
- DE-U1-202004 009 420
- JP-A- H07 237 472
- JP-U- H06 886
- JP-U- S5 377 374
- US-A- 2 990 458
- US-A- 3 609 254

## Beschreibung

Die Erfindung betrifft ein Verfahren zur Verbindung von stirnseitig aneinanderstoßenden Stromschienen eines Fahrleitungssystems.

Zur Fahrstromversorgung elektrisch betriebener Bahnen sind neben Oberleitungen Stromschienen bekannt, die Teil des Fahrleitungssystems sind. Aus Transportgründen haben die Stromschienen im Allgemeinen eine maximale Länge von 10 bis 12 m. Daher ist für die Errichtung der Fahrstrecke erforderlich, mehrere Stromschienen fest miteinander zu verbinden. Die Verbindung der stirnseitig aneinanderstoßenden Stromschienen erfolgt im Allgemeinen mittels Verbindungsstücken, die an den Stoßstellen in Ausnehmungen der Stromschienen eingesetzt werden. Es ist bekannt, die Stromschienen und die Verbindungsstücke mit Schrauben miteinander zu verbinden, die in Bohrungen der Stromschienen und Verbindungsstücke sitzen.

Aus der EP 2 255 991 A2 ist eine Stromschiene mit einem Querträger bekannt, von dem zwei Spannarme ausgehen, an die Klemmarme zur Aufnahme eines Fahrdrahtes angeformt sind. Die Spannarme und Klemmarme schließen einen Zwischenraum ein, der die Verbindungsstücke zur Verbindung der Stromschienen aufnimmt. Die EP 0 828 629 B1 beschreibt eine ähnliche Stromschiene, die im Wesentlichen das gleiche Profil wie die aus der EP 2 255 991 A2 bekannte Stromschiene hat.

Obwohl sich die bekannten Stromschienen in der Praxis bewährt haben, besteht das grundsätzliche Problem des Durchhangs der Stromschienen zwischen den Stützpunkten. Um den Durchhang möglichst gering halten zu können, sollten die Stromschienen ein möglichst hohes Trägheitsmoment bei einem möglichst geringen Gewicht haben.

In der Praxis hat sich gezeigt, dass trotz der Verbindung der Stromschienen mit den bekannten Verbindungsstücken eine leichte Auslenkung der Stromschienen an den Stoßstellen zu Knickstellen führen kann. Das Auftreten von Knickstellen an den Verbindungspunkten der Stromschienen aufgrund des Lochspiels der Schrauben in den Bohrungen sollte aber vermieden werden.

Die DE 20 2004 009 420 U1 schlägt zur Vermeidung von Knickstellen neben der Schraubverbindung eine formschlüssige Nut- und Federverbindung an den Stoßstellen der Stromschienen vor. Mit dieser zusätzlichen Verbindung sollen sich die Stromschienen in einer Achse ohne nennenswerte Verformungen verlegen lassen. In der Praxis hat sich jedoch gezeigt, dass trotz der besonderen Verbindungstechnik Verformungen in Längsrichtung der Stromschienen nicht zu vermeiden sind.

Aus der JP H07237472 A ist ein Verfahren zur Verbindung von stirnseitig aneinander stoßenden Stromschienen eines Fahrleitungssystems nach dem Oberbegriff des Patentanspruchs 1 bekannt. Die JP H07237472 A beschreibt ein Verfahren zur Verbindung von Stromschienen mit Verbindungsstücken, die an den Stoßstellen in die Stromschienen eingesetzt und mit den Stromschienen verbunden werden. Die Verbindungsstücke werden mit den stirnseitig aneinander stoßenden Endstücken der Stromschienen mehrfach verschraubt. Die Endstücke der Stromschienen und die Verbindungsstücke sind derart ausgebildet, dass sie beim Verschrauben exakt zueinander horizontal ausgerichtet werden, d.h. die Stromschienen sich an den Stoßstellen nicht verformen oder nicht durchknicken können.

Der Erfindung liegt die Aufgabe zugrunde, ein Verfahren anzugeben, mit dem sich die Verbindung der Stromschienen an den Stoßstellen weiter verbessern lässt.

Die Lösung dieser Aufgabe erfolgt erfindungsgemäß mit den Merkmalen des Patentanspruchs 1. Die Unteransprüche beziehen sich auf vorteilhafte Ausführungsformen des erfindungsgemäßen Verfahrens.

Das erfindungsgemäße Verfahren beruht darauf, dass die miteinander zu verbindenden Stromschienen in einer vorgegebenen Höhe an vorgegebenen Stützpunkten angeordnet und zwischen den Stützpunkten an einem vorgegebenen Punkt um einen vorgegebenen Betrag angehoben werden, bevor die an den Stoßstellen aneinanderstoßenden Stromschienen mit in die Ausnehmungen der Stromschienen eingesetzten Verbindungsstücken fest miteinander verbunden werden.

Dabei ist unter der vorgegebenen Höhe die Höhe zu verstehen, auf der die Stromschienen befestigt werden sollen. Beispielsweise können die Stromschienen auf der vorgegebenen Höhe an Auslegern aufgehängt werden. Die Stützpunkte sind dann die Befestigungspunkte der Stromschienen an den Auslegern.

Der vorgegebene Betrag, um den die Stromschienen an dem vorgegebenen Punkt zwischen den Stützpunkten angehoben werden, entspricht vorzugsweise genau dem Betrag, um den die an den Stützpunkten befestigten Stromschienen an dem vorgegebenen Punkt durchhängen. Dieser Durchhang kann entweder statisch berechnet oder aber auch auf der Baustelle gemessen werden. Beispielsweise kann nach der Aufhängung der Schienen an den Stützpunkten der Durchhang mit einem Laser-Messgerät gemessen werden. Die Stromschienen werden vorzugsweise an einem Punkt angehoben, der genau in der Mitte zwischen den Stützpunkten liegt, da an diesem Punkt unter der Annahme einer gleichmäßigen Lastverteilung der Durchhang am größten ist.

Nach dem Anheben der Stromschienen werden die passenden Verbindungsstücke mit den Stromschienen fest verbunden. Da die Stromschienen vor der Herstellung der festen Verbindung angehoben wurden, sind die Endstücke der an den Stirnseiten aneinanderstoßenden Stromschienen exakt zueinander ausgerichtet, ohne dabei ausgelenkt zu sein. Mit der Herstellung der festen Verbindung werden die Stromschienen in dieser Position festgehalten, so dass die Stromschienen exakt auf einer Achse liegen.

Die Verbindungsstücke können die im Stand der Technik bekannten Verbindungsstücke sein, die in Ausnehmungen der Stromschienen eingesetzt werden. Dabei können die Stromschienen und Verbindungsstücke auch eine Nut- und Federverbindung bilden.

Bei einer bevorzugten Ausführungsform wird die Verbindung der Stromschienen und der Verbindungsstücke mittels Verbindungselementen vorgenommen, die in einander fluchtende Bohrungen der Verbindungsstücke und der Stromschienen eingesetzt werden. Diese Verbindungselemente sind vorzugsweise zylindrische Verbindungselemente, die nach dem Einsetzen in die Bohrungen plastisch verformt werden. Beispielsweise können die bekannten Blindnieten verwendet werden. Vorzugsweise finden so genannte Blindnietbolzen Verwendung, die im Stand der Technik bekannt sind. Insbesondere mit den bekannten Blindnietbolzen wird eine ausreichend feste Verbindung erzielt. Da die Verbindung formschlüssig ist, können sich die Stromschienen nicht verschieben, was bei einer nicht formschlüssigen Verbindung und den vorhandenen Bauteiltoleranzen grundsätzlich möglich wäre. Dadurch wird eine gegen Vibrationen sichere und wartungsfreie Verbindung der Stromschienen mit einer langen Lebensdauer erreicht, ohne dass an den Verbindungsstellen die Gefahr der Bildung von Knickstellen besteht.

Die Stromschienen können grundsätzlich unterschiedlich ausgebildet sein. Als besonders vorteilhaft haben sich Stromschienen erwiesen, die einen in der Einbaulage oberen Träger aufweisen, an den sich zwei nach unten erstreckende Schenkel anschließen, die in sich nach innen ersteckende Klemmarme zur Aufnahme des Fahrdrahtes übergehen, wobei die Ausnehmung zur Aufnahme der Verbindungsstücke der Zwischenraum zwischen dem oberen Träger sowie den beiden Schenkeln und den Klemmarmen ist.

Die Verbindungselemente sind vorzugsweise Verbindungsplatten, die an den Stirnseiten der an den Stoßstellen aneinanderstoßenden Stromschienen in die Ausnehmungen der Stromschienen eingeschoben werden. Vorzugsweise werden in die Ausnehmungen der Stromschienen jeweils zwei Verbindungsplatten eingeschoben, die jeweils mit Blindnieten, insbesondere Blindnietbolzen, verbunden werden. Dabei wird zum Herstellen der Verbindung der beiden Verbindungsplatten mit den Stromschienen die eine Verbindungsplatte mit dem einen Schenkel und die andere Verbindungsplatte mit dem anderen Schenkel der Verbindungsstücke verbunden. Durch die Verwendung der Blindnietbolzen wird auch der Montageaufwand verringert.

Im Folgenden wird ein Ausführungsbeispiel der Erfindung unter Bezugnahme auf die Zeichnungen näher erläutert.

Es zeigen:
- Fig. 1: einen Ausleger eines Fahrleitungssystems, an dem eine Stromschiene aufgehängt ist,
- Fig. 2: die Stromschiene in der Seitenansicht,
- Fig. 3: die Stromschiene in geschnittener Darstellung, wobei in die Stromschiene zwei Verbindungstücke eingesetzt sind,
- Fig. 4: ein Verbindungsstück in der Seitenansicht,
- Fig. 5: einen Blindnietbolzen in der Seitenansicht und
- Fig. 6: die Verbindung von Stromschiene und Verbindungsstück mittels des Blindnietbolzens.

Für die Errichtung eines Fahrleitungssystems werden die einzelnen Stromschienen an den Stoßstellen miteinander verbunden. Dabei werden die Stromschienen an Stützpunkten befestigt, die entlang der Fahrstrecke in vorgegebenen Abständen angeordnet sind. Die stirnseitige Verbindung der Stromschienen erfolgt an den Momenten-Nullpunkten, sodass der Durchhang der Stromschienen auf ein Minimum reduziert wird.

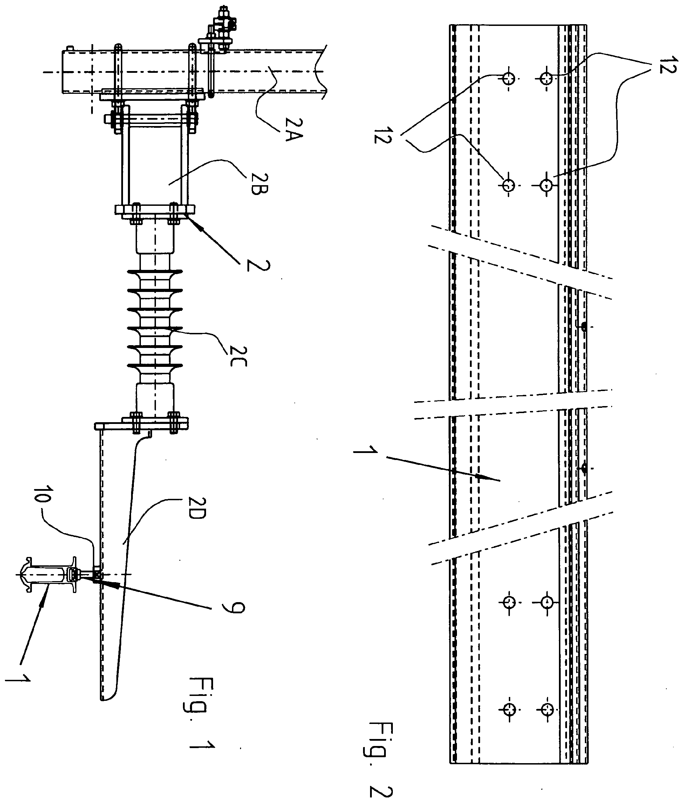

Fig. 1 zeigt ein Ausführungsbeispiel eines Fahrleitungssystems, bei dem die Stromschiene 1 an einem Ausleger 2 befestigt ist, der wiederum an der Decke eines Tunnels befestigt ist. Der Ausleger 2 weist einen vertikalen an der Decke befestigten Arm 2A und einen horizontalen Arm 2B auf, an dem über einen Isolator 2C ein U-Profil 2D befestigt ist. An dem U-Profil 2D ist die Stromschiene 1 hängend befestigt.

Fig. 2 zeigt die Stromschiene 1 in der Seitenansicht. Die Stromschiene 1 hat eine Länge von 10 bis 12 m. Die stirnseitig aneinanderstoßenden Stromschienen werden mit Verbindungstücken miteinander verbunden, die in Ausnehmungen an den Endstücken der Stromschienen eingesetzt und mit den Stromschienen verbunden werden.

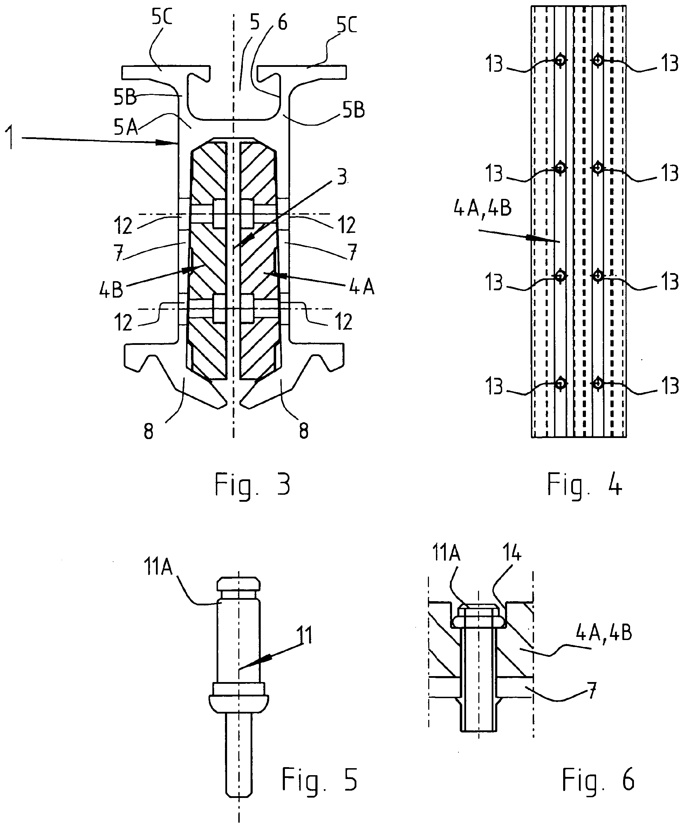

Fig. 3 zeigt einen Schnitt durch das Endstück einer Stromschiene 1, in deren Ausnehmung 3 zwei Verbindungsstücke 4A, 4B eingesetzt sind. Fig. 4 zeigt ein Verbindungsstück 4A, 4B in der Seitenansicht. Die Stromschiene 1 weist einen in der Einbaulage oberen Träger 5 auf. Der obere Träger 5 der Stromschiene 1 weist ein unteres Profilstück 5A auf, an dessen Enden sich unter Bildung der hinterschnittenen Ausnehmung 6 nach oben erstreckende Schenkel 5B anschließen. An die beiden oberen Schenkel sind zu beiden Seiten abstehende obere Arme 5C angeformt.

An das untere Profilstück 5A des oberen Trägers 5 schließen sich zu beiden Seiten nach unten erstreckende Schenkel 7 an, deren Querschnitt nach unten abnimmt. Die unteren

Enden der beiden Schenkel 7 gehen in sich nach innen erstreckende Klemmarme 8 über, die den nicht dargestellten Fahrdraht klemmend aufnehmen.

Der obere Träger 5 schließt mit den beiden Schenkeln und den Klemmarmen die Ausnehmung 3 zur Aufnahme der beiden Verbindungsstücke 4A, 4B ein, mit denen die einzelnen Stromschienen 1 miteinander verbunden werden. An die Schenkel 7 der Stromschiene 1 sind im Übergangsbereich zu den Klemmarmen zu beiden Seiten abstehende untere Arme 8 angeformt.

An den U-Profilen 2D der Ausleger 2 werden die Stromschienen 1 mit in Fig. 3 nicht dargestellten Hakenkopfschrauben befestigt, die in die hinterschnittenen Ausnehmungen 6 der Stromschienen eingesetzt werden.

Nachfolgend wird das Verfahren zum Verbinden der einzelnen Stromschienen beschrieben. Zunächst werden die Stromschienen 1 an den Stützpunkten 9, d. h. an den U-Profilen 2D der Ausleger 2, die in vorgegebenen Abständen entlang der Fahrstrecke angeordnet sind, lose befestigt. Hierzu werden jeweils zwei Verbindungstücke 4A, 4B in die Ausnehmungen 3 an den Endstücken der stirnseitig aneinanderstoßenden Stromschienen 1 eingesetzt, um die Stromschienen lose miteinander zu verbinden. Die lose miteinander verbundenen Stromschienen werden dann an den Hakenkopfschrauben 10 aufgehängt, die an den U-Profilen 2D der Ausleger 2 befestigt werden (Fig. 1). Die Stromschienen können aber auch mit anderen Befestigungsmitteln an den Auslegern befestigt werden. Dabei erfolgt die Befestigung der Stromschienen an den Auslegern in einer vorgegebenen Höhe.

Die endseitig an den Stützpunkten aufgehängten Stromschienen 1 hängen aufgrund ihres Eigengewichts durch. Der Durchhang ist in der Mitte zwischen zwei Auslegern am größten. An diesem Punkt werden die Stromschienen soweit angehoben, bis die Stromschienen an diesem Punkt auf der gleichen Höhe wie die endseitigen Stützpunkte liegen. Die Stromschienen werden also um den Betrag des Durchhangs angehoben. Wenn der Durchhang bekannt ist, wird die jeweilige Stromschiene um den bekannten Betrag angehoben. Dies setzt aber die Berechnung des zu erwartenden Durchhangs voraus. Der Durchhang kann aber auch auf der Baustelle gemessen werden.

Eine feste Verbindung der Endstücke der Stromschienen 1 und der Endstücke der Verbindungsstücke 4A, 4B wird erst nach dem Anheben der Stromschienen um den Betrag des Durchhangs hergestellt.

Fig. 4 zeigt die Blindnietbolzen 11 zur Herstellung der Verbindung. Die Blindnietbolzen 11 werden in passende Bohrungen 12 an den Stromschienen 1 und passende Bohrungen 13 den Verbindungsstücken 4A, 4B eingesetzt. Der Kopf 11 A der Blindnietbolzen 11 liegt in einer Nut 14, die an Innenseite jedes Verbindungsstücks vorgesehen ist (Fig. 6) ist. Für jedes Verbindungsstück werden insgesamt acht Blindnietbolzen vorgesehen, die das jeweilige Endstück des Verbindungsstücks 4A, 4B mit dem jeweiligen Schenkel 7 der Stromschiene 1 verbinden.

Anschließend werden die Blindnietbolzen 11 mittels eines nicht dargestellten Montagewerkzeugs verformt. Da das Verfahren zur Herstellung einer Verbindung mit den Blindnietbolzen bekannt ist, wird das Verbindungsverfahren nicht im Einzelnen beschrieben. Die Bohrungen 12 bzw. 13 in den Stromschienen 1 und/oder den Verbindungsstücken 4A, 4B können grundsätzlich werksseitig oder auf der Baustelle vorgenommen werden. Von Vorteil ist, wenn beide Verbindungstücke bereits an der einen Stromschiene vormontiert sind. Dann brauchen an der Baustelle nur die freien Endstücke der Verbindungstücke mit dem stirnseitigen Endstück der anderen Stromschiene verbunden zu werden. Vorzugsweise werden die Bohrungen in dem Endstück der anderen Stromschiene werksseitig vorgesehen, wobei nach Ausrichten und Anheben der jeweiligen Stromschiene die Bohrungen in den Verbindungsstücken erst auf der Baustelle vorgenommen werden. Dabei können die Bohrungen in der Stromschiene als Bohrschablone dienen.

Fig. 6 zeigt die formschlüssige Verbindung von Stromschiene 1 und Verbindungsstück 4A, 4B, die unter Verwendung der bekannten Blindnietbolzen 11 erzielt wird.

## Patentansprüche

1. Verfahren zur Verbindung von stirnseitig aneinanderstoßenden Stromschienen (1) eines Fahrleitungssystems mit Verbindungsstücken (4A, 4B), die an den Stoßstellen in Ausnehmungen (3) der Stromschienen eingesetzt und mit den Stromschienen verbunden werden,
**dadurch gekennzeichnet, dass**
die miteinander zu verbindenden Stromschienen (1) an vorgegebenen Stützpunkten in einer vorgegebenen Höhe lose befestigt werden, wonach die endseitig an den Stützpunkten aufgehängten Stromschienen aufgrund ihres Eigengewichts durchhängen, die Stromschienen (1) dann an vorgegebenen Punkten, die zwischen den Stützpunkten liegen, um einen vorgebenden Betrag angehoben werden, und feste Verbindungen der an den Stoßstellen aneinanderstoßenden Stromschienen mit den in die Ausnehmungen (3) der Stromschienen eingesetzten Verbindungsstücken (4A, 4B) hergestellt werden.

2. Verfahren nach Anspruch 1, dadurch gekennzeichet, dass der vorgegebene Betrag, um den die Stromschienen (1) an dem vorgegebenen Punkt angehoben werden, dem Betrag entspricht, um den die an den Stützpunkten lose befestigten Stromschienen an dem vorgegebenen Punkt durchhängen.

3. Verfahren nach Anspruch 1 oder 2, **dadurch gekennzeichnet, dass** die Stromschienen (1) an einem Punkt angehoben werden, der in der Mitte zwischen den Stützpunkten liegt.

4. Verfahren nach Anspruch 3, **dadurch gekennzeichnet, dass** die Stützpunkte der Stromschienen (1) an den Momenten-Nullpünkten liegen.

5. Verfahren nach einem der Ansprüche 1 bis 4, **dadurch gekennzeichnet, dass** die Verbindungsstücke (4A, 4B) mit den Stromschienen (1) mittels Verbindungselementen (11) verbunden werden, die in einander fluchtende Bohrungen (13; 12) der Verbindungselemente (4A, 4B) und der Stromschienen (1) eingesetzt werden.

6. Verfahren nach einem der Ansprüche 1 bis 4, **dadurch gekennzeichnet**, **dadurch gekennzeichnet, dass** die Verbindungselemente (11) zylindrische Verbindungselemente sind, die nach dem Einsetzen in die Bohrungen (13; 12) plastisch verformt werden.

7. Verfahren nach einem der Ansprüche 1 bis 6, **dadurch gekennzeichnet, dass** die Stromschienen (1) einen in der Einbaulage oberen Träger (5) aufweisen, an den sich zwei nach unten erstreckende Schenkel (7) anschließen, die in sich nach innen ersteckende Klemmarme (8) zur Aufnahme eines Fahrdrahtes übergehen, wobei die Ausnehmung (3) zur Aufnahme der Verbindungsstücke der Zwischenraum zwischen dem oberen Träger (5) sowie den beiden Schenkeln (7) und den Klemmbarmen (8) ist.

8. Verfahren nach einem der Ansprüche 1 bis 7, **dadurch gekennzeichnet, dass** die Verbindungselemente (4A, 4B) Verbindungsplatten sind, die an den Stirnseiten der an den Stoßstellen aneinanderstoßenden Stromschienen (1) in die Ausnehmungen (3) der Stromschienen eingeschoben werden.

9. Verfahren nach Anspruch 8, **dadurch gekennzeichnet, dass** in die Ausnehmungen der Stromschienen (1) jeweils zwei Verbindungsplatten (4A, 4B) eingeschoben werden.

10. Verfahren nach einem der Ansprüche 1 bis 9, **dadurch gekennzeichnet, dass** zum Herstellen der Verbindung der beiden Verbindungsplatten (4A, 4B) mit den Stromschienen (1) die eine Verbindungsplatte mit dem einen Schenkel und die andere Verbindungsplatte mit dem anderen Schenkel der Verbindungsstücke verbunden wird.

## Claims

1. Method for connecting conductor rails (1), adjoining at the end faces, of an overhead catenary system comprising connection pieces (4A, 4B) that are inserted into recesses (3) in the conductor rails at the joints and are connected to the conductor rails, **characterised in that** the conductor rails (1) to be interconnected are loosely fastened to predetermined support points at a predetermined height, after which the conductor rails suspended at their ends from the support points sag under their own weight, the conductor rails (1) are then raised at predetermined points between the support points by a predetermined amount, and the conductor rails adjoining at the joints are rigidly connected to the connection pieces (4A, 4B) inserted into the recesses (3) in the conductor rails.

2. Method according to claim 1, **characterised in that** the predetermined amount by which the conductor rails (1) are raised at the predetermined point corresponds to the amount by which the conductor rails, loosely fastened to the support points, sag at the predetermined point.

3. Method according to either claim 1 or claim 2, **characterised in that** the conductor rails (1) are raised at a central point between the support points.

4. Method according to claim 3, **characterised in that** the support points of the conductor rails (1) are located at the points of zero moment.

5. Method according to any of claims 1 to 4, **characterised in that** the connection pieces (4A, 4B) are connected to the conductor rails (1) by means of connection elements (11) that are inserted into mutually aligned holes (13; 12) in the connection elements (4A, 4B) and conductor rails (1).

6. Method according to any of claims 1 to 4, **characterised in that** the connection elements (11) are cylindrical and are plastically deformed after being inserted into the holes (13; 12).

7. Method according to any of claims 1 to 6, **characterised in that** the conductor rails (1) comprise a carrier (5) that is at the top in the installation position, to which carrier two downwardly extending limbs (7) are connected that transition into inwardly extending clamping arms (8) for receiving an overhead wire, the recess (3) for receiving the connection pieces being the gap between the upper carrier (5), the two limbs (7) and the clamping arms (8).

8. Method according to any of claims 1 to 7, **characterised in that** the connection elements (4A, 4B) are connection plates that are pushed into the recesses (3) in the conductor rails on the end faces of the conductor rails (1) adjoining at the joints.

9. Method according to claim 8, **characterised in that** two connection plates (4A, 4B) are pushed into each of the recesses in the conductor rails (1).

10. Method according to any of claims 1 to 9, **characterised in that**, in order to connect the two connection plates (4A, 4B) to the conductor rails (1), one connection plate is connected to one limb of the connection piece and the other connection plate is connected to the other limb.

## Revendications

1. Procédé de liaison de rails (1) conducteurs d'électricité butant l'un contre l'autre côté avant d'un système de fil de contact pourvu de pièces de liaison (4A, 4B) qui sont insérées sur les jonctions dans des évidements (3) des rails conducteurs et reliées aux rails conducteurs,
**caractérisé en ce que**
les rails conducteurs (1) à relier l'un à l'autre sont fixés de manière lâche sur des points d'appui prescrits à une hauteur prédéfinie, après quoi les rails conducteurs suspendus côté extrémité sur les points d'appui s'affaissent en raison de leur propre poids, puis les rails conducteurs (1) sont levés d'un niveau prédéfini sur des points prescrits qui se situent entre les points d'appui, et des liaisons fixes des rails conducteurs butant l'un contre l'autre sont établies sur les jonctions avec les pièces de liaison (4A, 4B) insérées dans les évidements (3) des rails conducteurs.

2. Procédé selon la revendication 1, **caractérisé en ce que** le niveau prédéfini, auquel les rails conducteurs (1) sont levés sur le point prescrit, correspond au niveau d'affaissement sur le point prescrit des rails conducteurs ayant été fixés de manière lâche sur les points d'appui.

3. Procédé selon la revendication 1 ou 2, **caractérisé en ce que** les rails conducteurs (1) sont levés sur un point qui se trouve au milieu entre les points d'appui.

4. Procédé selon la revendication 3, **caractérisé en ce que** les points d'appui des rails conducteurs (1) se trouvent sur les points fixes à moment nul.

5. Procédé selon l'une quelconque des revendications 1 à 4, **caractérisé en ce que** les pièces de liaison (4A, 4B) sont reliées aux rails conducteurs (1) à l'aide d'éléments de liaison (11) qui sont insérés dans des perçages (13 ; 12) s'alignant les uns sur les autres des éléments de liaison (4A, 4B) et des rails conducteurs (1).

6. Procédé selon l'une quelconque des revendications 1 à 4, **caractérisé en ce que** les éléments de liaison (11) sont des éléments de liaison cylindriques qui sont déformés plastiquement après l'insertion dans les perçages (13 ; 12).

7. Procédé selon l'une quelconque des revendications 1 à 6, **caractérisé en ce que** les rails conducteurs (1) présentent un support (5) supérieur dans la position d'intégration, auquel se raccordent deux branches (7) s'étendant vers le bas, lesquelles se prolongent par des bras de serrage (8) s'étendant vers l'intérieur pour la réception d'un fil de contact, l'évidement (3) pour la réception des pièces de liaison étant l'espace intermédiaire entre le support supérieur (5), les deux branches (7) et les bras de serrage (8).

8. Procédé selon l'une quelconque des revendications 1 à 7, **caractérisé en ce que** les éléments de liaison (4A, 4B) sont des plaques de liaison, qui sont insérées sur les côtés avant des rails conducteurs (1) butant l'un contre l'autre sur les jonctions dans les évidements (3) des rails conducteurs.

9. Procédé selon la revendication 8, **caractérisé en ce que** respectivement deux plaques de liaison (4A, 4B) sont insérées dans les évidements des rails conducteurs (1).

10. Procédé selon l'une quelconque des revendications 1 à 9, **caractérisé en ce que** pour l'établissement de la liaison des deux plaques de liaison (4A, 4B) avec les rails conducteurs (1), l'une plaque de liaison est reliée à l'une branche et l'autre plaque de liaison est reliée à l'autre branche des pièces de liaison.
